# EUROPÄISCHE PATENTSCHRIFT

(11) **EP 1 850 551 B1**
(45) Veröffentlichungstag und Bekanntmachung des Hinweises auf die Patenterteilung: **05.10.2016**
(21) Anmeldenummer: 06008955.4
(22) Anmeldetag: 28.04.2006
(51) Int. Cl.: H04L 29/06

(54) **Verfahren und Vorrichtungen zum Etablieren einer Kommunikation in einem paketorientierten Netzwerk**
Method and apparatuses for establishing a communication in a packet oriented network
Méthode et appareils pour établir une communication dans un réseau orienté paquet

(43) Veröffentlichungstag der Anmeldung: 31.10.2007
(73) Patentinhaber: Unify GmbH & Co. KG, 81379 München (DE)
(72) Erfinder: Kennedy, Stephan, 86949 Windach (DE); Stach, Thomas, Dr., 1130 Wien (AT)
(74) Vertreter: Fritzsche, Thomas

(56) Entgegenhaltungen:
- US-A1- 2005 111 459
- ITU-T Q2/16: "Draft revised H.323 version 6 "Packet based multimedia communications systems", paragraph 8 "call signalling procedures" and Annex R "Robustness methods for H.323 entities"" ITU-T TEMPORARY DOCUMENT, [Online] 3. April 2006 (2006-04-03), - 13. April 2006 (2006-04-13) Seiten 1-82, XP002399492 Gefunden im Internet: URL:http://ftp3.itu.ch/av-arch/avc-site/20 05-2008/0604_Gen/> [gefunden am 2006-09-19]
- ROSENBERG J ET AL: "SIP: Session Initiation Protocol" IETF STANDARD, INTERNET ENGINEERING TASK FORCE, IETF, CH, Juni 2002 (2002-06), Seiten 1-269, XP015009039 ISSN: 0000-0003

## Beschreibung

Bei zeitgemäßen Kommunikationssystemen ist bekannt, Nutzdaten über paketorientierte Netzwerke zu übermitteln. Nutzdaten sind beispielsweise digitalisierte Sprachdaten, wobei für eine Übermittlung von Sprachdaten über paketorientierte Netzwerke der Begriff "Voice over IP" oder abkürzend VoIP geläufig ist. Durch die Verwendung paketorientierter Datenübertragungsverfahren ergeben sich häufig Einbußen in der Qualität der zu übertragenden Nutzdaten, welche häufig durch Konvertierungen, Verzögerungen oder Verlust von Nutzdatenpaketen in Netzwerkknoten bedingt sind.

In Anlehnung an das häufig zum Einsatz kommende so genannte Internet Protocol, abkürzend auch mit IP bezeichnet, wird im folgenden auf Kommunikationsendgeräte, welche auf Basis einer paketorientierten Übertragungstechnik arbeiten, mit dem Begriff "IP-Endeinrichtung" Bezug genommen.

Eine Verbindung zwischen IP-Endeinrichtungen kann in paketorientierten Netzwerken üblicherweise über Netzwerkknoten wie so genannte Router, Switches oder Gateways geleitet werden. Router vermitteln hierbei üblicherweise Daten zwischen paketorientierten Subnetzwerken, während durch Gateways darüber hinaus einen Übergang zwischen unterschiedlichen Arten von leitungsvermittelten und/oder paketorientierten Netzwerken bereitgestellt werden kann.

Bei einer Verbindung zwischen zwei IP-Endeinrichtungen können die Nutzdaten insbesondere über mehrere Gateways geleitet werden, wobei sich jedes zusätzliche Gateway in einem Übertragungspfad der Nutzdaten negativ auf die Nutzdatenqualität - also beispielsweise eine Sprachqualität - auswirken kann. Häufig wird darüber hinaus bei paketorientierten Verbindungen zwischen Signalisierungsverbindungen und Nutzdatenverbindungen unterschieden, wobei Signalisierungs- und Nutzdatenverbindungen zwischen zwei IP-Endeinrichtungen unterschiedliche Verbindungspfade im Netzwerk aufweisen können.

Zur Verbesserung der Sprachqualität können IP-Endeinrichtungen, die die ITU-T-Empfehlung H.323 (ITU-T: International Telecommunication Union - Telecommunications Standardization Sector) und die so genannte Direct Media Connection (DMC) unterstützen, Kommunikationsnutzdaten direkt zwischen den IP-Endeinrichtungen unter Umgehung der Gateways übermitteln und damit zusätzliche Konvertierungen und Verzögerungen vermeiden. Dabei erweist sich teilweise weiterhin als problematisch, dass bei üblichen DMC-Verfahren beim Durchschalten der Nutzdatenverbindung sich ein Zeitverzug bis zu einer endgültigen Ende-zu-Ende-Durchschaltung zwischen den IP-Endeinrichtungen ergibt, so dass bei Sprachverbindungen der Beginn eines Gesprächs einem Gesprächspartner möglicherweise nicht übermittelt wird.

In ITU-T Q2/16: "Draft revised H.323 version 6 "Packet based multimedia communications systems", paragraph 8 "call signalling procedures" and Annex R "Robustness methods for H.323 entities"" ITU-T TEMPORARY DOCUMENT, [Online] 3. April 2006 (2006-04-03), - 13. April 2006 (2006-04-13) Seiten 1-82, sind paketbasierte Multimedia-Kommunikationssysteme definiert. Mittels des Fast-connect-Verfahrens können nach einem Empfang einer Setup-Nachricht eines rufenden Endgerätes durch ein gerufenes Endgerät Medien von dem gerufenen Endgerät an das rufende Endgerät übertragen werden, bevor eine H.225.0 Signalisierungsnachricht des gerufenen Endgerätes das rufende Endgerät erreicht.

In US 2005/0111459 A1 ist ein Verfahren zur Übermittlung von Kommunikationsdaten in einem vorzugsweise heterogenen Kommunikationssystem beschrieben. Nach dem erfolgreichen Aufbau einer primären Verbindung erfolgt ein Nutzdatenaustausch zwischen einem rufenden Teilnehmer A und einem gerufenen Teilnehmer B auf diesem Verbindungsweg. Nach dem vollständig erfolgten Aufbau der primären Verbindung wird eine sekundäre Verbindung direkt zwischen den beiden Kommunikationsendpunkten der Teilnehmer A und B aufgebaut.

Es ist Aufgabe der Erfindung ein Verfahren anzugeben, bei dem ein Etablieren einer Kommunikation zwischen zwei Kommunikationsendeinrichtungen in einem paketorientierten Kommunikationsnetzwerk verbessert wird. Weiterhin ist es Aufgabe der Erfindung ein Kommunikationssystem und eine Kommunikationsendeinrichtung zur Durchführung des Verfahrens anzugeben.

Gelöst wird diese Aufgabe durch ein Verfahren mit den Merkmalen nach Patentanspruch 1, sowie durch eine Kommunikationseinrichtung nach Patentanspruch 10.

Vorteilhafte Ausführungsformen und Weiterbildungen der Erfindung sind in den abhängigen Ansprüchen angegeben.

Bei dem erfindungsgemäßen Verfahren wird zum Etablieren einer Kommunikation, insbesondere von Medien wie Sprache, Video, Bilder, Fax oder Multimedia, in einem paketorientierten Kommunikationsnetzwerk zwischen einer rufenden und einer gerufenen Endeinrichtung, vor einer Rufannahme durch die gerufene Endeinrichtung, ausgelöst durch eine Meldung im Rahmen einer Rufaufbausignalisierung, eine direkte, erste Nutzdatenverbindung zwischen der rufenden und der gerufenen Endeinrichtung aufgebaut. Diese nun aufgebaute erste Nutzdatenverbindung wird aufrechtgehalten. Unmittelbar durch die Rufannahme der gerufenen Endeinrichtung wird die Kommunikation mittels der aufgebauten ersten Nutzdatenverbindung zwischen der rufenden und der gerufenen Endeinrichtung ausgelöst.

Bei dem erfindungsgemäßen Verfahren ist insbesondere vorteilhaft, dass nach einem Initiieren eines Rufaufbaus bereits vor Rufannahme durch die gerufene Endeinrichtung die direkte, erste Nutzdatenverbindung aufgebaut wird, so dass ein langwieriges Aufbauen einer Nutzdatenverbindung erst bei Rufannahme zwischen der rufenden und der gerufenen Endeinrichtung entfallen kann. Da die erste Nutzdatenverbindung aufgebaut für eine Übertragung von Nutzdaten - beispielsweise eine digitalisierte und kodierte Sprache - bereitsteht, kann sichergestellt werden, dass direkt bei Rufannahme die Nutzdaten übertragen werden können, ohne dass Einschaltverzögerungen entstehen. Insbesondere kann durch das erfindungsgemäße Verfahren sichergestellt werden, dass durch die gerufene Endeinrichtung die zugeführte Kommunikation bei Rufannahme ohne Verzug verarbeitet und über die bereits aufgebaute erste Nutzdatenverbindung an die rufende Endeinrichtung übermittelt werden kann, so dass letztere die gesamte, an der gerufenen Endeinrichtung eingehenden Kommunikation erreichen kann - ohne Verlust eines initialen Kommunikationsabschnitts in einem sonst üblichen Zeitabschnitt zwischen Rufannahme und Durchschaltung einer Nutzdatenverbindung. Eine derartige Übertragungslücke oder eine zu große Durchschalteverzögerung in der Nutzdatenübermittlung kann somit vermieden werden.

Bei Anwendung der Erfindung auf eine Sprachkommunikation über Telefone wird somit direkt nach Abheben des Hörers an einem gerufenen Telefon als gerufene Endeinrichtung die am Mikrofon eingehenden Töne als erfindungsgemäße Kommunikation durch das gerufene Telefon weiterverarbeitet - d.h. insbesondere kodiert - und über die bereits aufrechtgehaltene Nutzdatenverbindung an ein rufendes Telefon als rufende Endeinrichtung übermittelt. Ein ansonsten häufig auftretender Verlust von einem Sprachabschnitt direkt nach Abheben des Hörers wird dadurch vermieden.

Unter der Rufannahme versteht man insbesondere Aktionen, die ein Akzeptieren der signalisierten Rufaufbausignalisierung für ein Durchschalten der Nutzdatenverbindung bewirken. Das ist bei Telefonen insbesondere ein Abheben eines Hörers oder ein Drücken einer Taste. Alternativ kann an anderen Endeinrichtungen, wie z.B. Faxgeräte, ein Akzeptieren der eingehenden Verbindung automatisch, ohne manuelles Eingreifen ausgelöst werden.

Als direkte, erste Nutzdatenverbindung kann eine Verbindung zwischen zwei Endeinrichtungen verstanden werden, die insbesondere unter Umgehung von Verbindungssteuerungen wie Gateways und/oder Gatekeeper besteht. Dies ist beispielsweise in einer vorteilhaften Ausführungsform der Erfindung eine direkte Medien-Verbindung, insbesondere gemäß Direct Media Connection (DMC) Vorgaben. Eine Verbindung über Netzwerkelemente, die lediglich für einen Transport von Daten auf einer niedrigen Schicht des von der ISO (International Organization for Standardization) standardisierten OSI-Referenzmodells (OSI: Open Systems Interconnection) durchführen - beispielsweise Bridges, Switches, Router -, sollen im Sinne der Erfindung ebenfalls als direkte Verbindung angesehen werden. Je nach Ausführungsform, kann neben der direkten, ersten Nutzdatenverbindung zusätzlich vorgesehen sein, ebenfalls eine zusätzliche, über Verbindungssteuerungen geleitete Nutzdatenverbindung zwischen den Endeinrichtungen aufzubauen.

In einer vorteilhaften Weiterbildung der Erfindung können der gerufenen und der rufenden Endeinrichtung jeweils eine Verbindungssteuerung, insbesondere ein Gatekeeper und/oder ein Gateway, zugeordnet sein. Derartige Verbindungssteuerungen sind beispielsweise dazu vorgesehen, eine Zuordnung von Rufnummer zu IP-Adressen bereitzustellen, wobei eine jeweilige Verbindungssteuerung lediglich die ihr zugeordneten Endeinrichtungen verwaltet. Weiterhin können die Verbindungssteuerungen an einer Signalisierung und insbesondere an der erfindungsgemäßen Rufaufbausignalisierung beteiligt sein. Im Rahmen der Rufaufbausignalisierung können die Verbindungssteuerungen am Bestimmen der zu verwendenden Codecs (Kodierer/Dekodierer) der Endeinrichtungen und der Verbindungssteuerungen, des Signalisierungspfads und des Nutzdatenpfads im Kommunikationsnetzwerk, einer Verschlüsselung und/oder von weiteren Übermittlungsparametern für die spätere Nutzdatenverbindung beteiligt sein. Abhängig von der Netzwerkstruktur und der Gruppierung der Endeinrichtung kann ein Pfad der Rufaufbausignalisierung über mehrere Verbindungssteuerungen verlaufen.

In einer weiteren vorteilhaften Weiterbildung der Erfindung kann vor der Rufannahme durch die gerufene Endeinrichtung, ausgelöst durch eine Meldung im Rahmen einer Rufaufbausignalisierung, eine zweite Nutzdatenverbindung zwischen der rufenden Endeinrichtung und einer Verbindungssteuerung - insbesondere einer an der Rufaufbausignalisierung beteiligten Verbindungssteuerung - aufgebaut werden. Vorzugsweise werden die an der rufenden Endeinrichtung über die zweite Nutzdatenverbindung eingehenden Nutzdaten an der rufenden Endeinrichtung weiterverarbeitet, sofern keine Rufannahme durch die gerufene Endeinrichtung erfolgt ist. Diese zweite Nutzdatenverbindung kann dazu genutzt werden bei Sprachverbindungen der rufenden Endeinrichtung den Ruf- oder Klingelton zum Anzeigen eines Frei- oder Besetztzeichens als hörbare Repräsentation des Rufzustands der gerufenen Endeinrichtung zu übermitteln. Darüber hinaus kann die zweite Nutzdatenverbindung dazu verwendet werden von der Verbindungssteuerung oder einem weiteren Netzknoten erzeugte Ansagen, Auswahl- und/oder Eingabemenüs an die rufende Endeinrichtung zu übermitteln. Verallgemeinert und unabhängig vom übermittelten Medientyp für die Nutzdatenkommunikation, kann die zweite Nutzdatenverbindung für eine Übermittlung einer weiteren Kommunikation zwischen einer Verbindungssteuerung und der rufenden Endeinrichtung vor der Rufannahme durch die gerufene Endeinrichtung vorgesehen sein, wobei die weitere Kommunikation eine in einem Rufaufbauzustand - d.h. währendes des Rufaufbaus und vor Abheben der gerufenen Endeinrichtung - vorgesehene Audio-, Video- und/oder Multimediainformation darstellen kann, sofern von einem beliebigen, von der rufenden Endeinrichtung verschiedenen Netzknoten erzeugt wird.

In einer vorteilhaften Ausführungsform kann vor der Rufannahme zwischen der rufenden Endeinrichtung und der gerufenen Endeinrichtung eine der ersten Nutzdatenverbindung zugeordnete, direkte Signalisierungsverbindung zwischen der rufenden Endeinrichtung und der gerufenen Endeinrichtung, insbesondere über denselben Datenpfad im Kommunikationsnetzwerk wie die erste Nutzdatenverbindung, aufgebaut werden. Diese kann zusätzlich zu weiteren über Verbindungssteuerungen verlaufende Signalisierungen aufgebaut werden und kann vorteilhafterweise für eine Signalisierung für eine direkte Verbindung gemäß DMC (Direct Media Connection) verwendet werden, wobei nach der Rufannahme die direkte Signalisierungsverbindung und die direkte, erste Nutzdatenverbindung die DMC-Verbindung repräsentieren.

Gemäß einer weiteren vorteilhaften Weiterbildung der Erfindung können vor der Rufannahme durch die gerufene Endeinrichtung Maßnahmen zu einer Rufabbauunterdrückung durch die rufende Endeinrichtung und/oder die gerufene Endeinrichtung durchgeführt werden. Vorteilhafterweise kann somit verhindert werden, dass die erste Nutzdatenverbindung bereits vor der Rufannahme aufgrund einer Überschreitung einer üblichen Zeitvorgabe - beispielsweise eine maximale Zeit von Inaktivität an einer Verbindung - abgebaut wird und somit nicht mehr für die Übertragung der Kommunikation zur Verfügung stehen würde. Insbesondere kann ausgelöst durch die Rufaufbausignalisierung von der rufenden Endeinrichtung zur gerufenen Endeinrichtung Aufrechterhaltungsmeldungen oder -pakete von der gerufenen Endeinrichtung über die erste Nutzdatenverbindung an die rufende Endeinrichtung übermittelt werden. Eine Auslösezeit bis zum Abbauen einer Verbindung wird auch als "time out" der Verbindung oder als Erreichen der maximal erlaubten "Idle"-Zeit bezeichnet. Die Aufrechterhaltungspakete können als "Dummy"- ",keep alive"- oder "Idle"-Pakete bezeichnet werden, und werden von der gerufenen und/oder von der rufenden Endeinrichtung ausgesendet. Vorteilhafterweise kann die jeweilige empfangende Endeinrichtung aufgrund des Inhalts eines eintreffenden Pakets erkennen, ob es sich um ein Aufrechterhaltungspaket handelt und in diesem Fall den Inhalt ignorieren oder verwerfen. In einer vorteilhaften Ausgestaltung der Erfindung kann die rufende Endeinrichtung, bewirkt durch einen Empfang eines Aufrechterhaltungspakets ein weiteres Aufrechterhaltungspaket aussenden oder eine protokollkonforme Quittung aussenden. Vorzugsweise kann, solange durch die rufende Endeinrichtung über die erste Nutzdatenverbindung lediglich Aufrechterhaltungspakete empfangen werden, durch die rufende Endeinrichtung Aufrechterhaltungspakete über die erste Nutzdatenverbindung an die gerufene Endeinrichtung übermittelt werden.

Mittels Erkennen eines sich von den Aufrechterhaltungspaketen unterscheidenden Nutzdatenpakets und/oder eines - durch eine beginnende Übermittlung von Inhalten der Kommunikation - eine Rufannahme implizit anzeigenden Nutzdaten-Pakets an der rufenden Endeinrichtung kann in einer vorteilhaften Ausgestaltung der Erfindung die rufende Endeinrichtung die Rufannahme der gerufenen Endeinrichtung anhand von eingehenden Nutzdatenpaketen über die erste Nutzdatenverbindung erkennen und/oder ermitteln. Vorzugsweise geschieht dies ohne weitere Signalisierung über eine Signalisierungsverbindung, so dass vorteilhafterweise lediglich die erste Nutzdatenverbindung überwacht werden muss, ohne dass weitere Verbindungen der rufenden Endeinrichtung beachtet werden müssten. Da keine gesonderte Signalisierung der Rufannahme erforderlich ist, brauchen bestehende, verwendete Protokolle für die Erfindung nicht erweitert werden. Darüber hinaus werden Verzögerungen bis zur Übermittlung der ersten Nutzdatenpakete zur rufenden Endeinrichtung vermieden, insbesondere sofern durch die gerufene Endeinrichtung bei Erkennen der Rufannahme durch die gerufene Endeinrichtung das Senden von Aufrechterhaltungspakete beendet wird und die anstehenden Nutzdaten sofort - insbesondere ohne weiteren Verzug oder explizite Signalisierung - über die erste Nutzdatenverbindung übermittelt werden.

Ausgelöst durch ein Empfangen eines die Rufannahme anzeigenden Nutzdaten-Pakets über die erste Nutzdatenverbindung an der rufenden Endeinrichtung kann in einer vorteilhaften Ausführungsform der Erfindung durch die rufende Endeinrichtung die Rufannahme der gerufenen Endeinrichtung quittierungslos akzeptiert werden, indem die über die erste Nutzdatenverbindung empfangenen Nutzdaten in der rufenden Endeinrichtung weiterverarbeitet und an einer Ausgabeeinheit ausgegeben werden und eine darauf im verbundenen Zustand übliche Antwortmeldung an die gerufene Endeinrichtung übermittelt wird.. Darüber hinaus können durch die rufende Endeinrichtung die weiterhin über die zweite Nutzdatenverbindung eingehenden Nutzdaten verworfen werden und können an der rufenden Endeinrichtung anstehende Nutzdaten nun über die erste Nutzdatenverbindung übertragen werden und nicht weiterhin über die zweite Nutzdatenverbindung. Auf diese Weise erfolgt an der rufenden Endeinrichtung ein Umschalten zwischen der zweiten zur ersten Nutzdatenverbindung, ohne dass explizite Signalisierungsmeldung zum Bekanntgeben oder Auslösen dieses Umschaltens über eine Signalisierungsverbindung gesendet und/oder empfangen werden.

Die vorstehend genannten Vorteile, Weiterbildungen und Ausführungsformen gelten neben dem erfindungsgemäßen Verfahren in analoger Weise für das erfindungsgemäße Kommunikationssystem und für die erfindungsgemäße Kommunikationsendeinrichtung.

Ein Ausführungsbeispiel der Erfindung wird nachfolgend an Hand einer Zeichnung näher erläutert.

Dabei zeigt in schematischer Darstellung
- Figur 1: ein Kommunikationssystem, sowie einen Meldungsfluss und wesentliche Verfahrensschritte im Rahmen eines Etablieren einer Kommunikation in dem Kommunikationssystem, und
- Figur 2: ein Ablaufdiagramm einer rufenden und einer gerufenen Endeinrichtung in dem Kommunikationssystems zum Etablieren der Kommunikation.

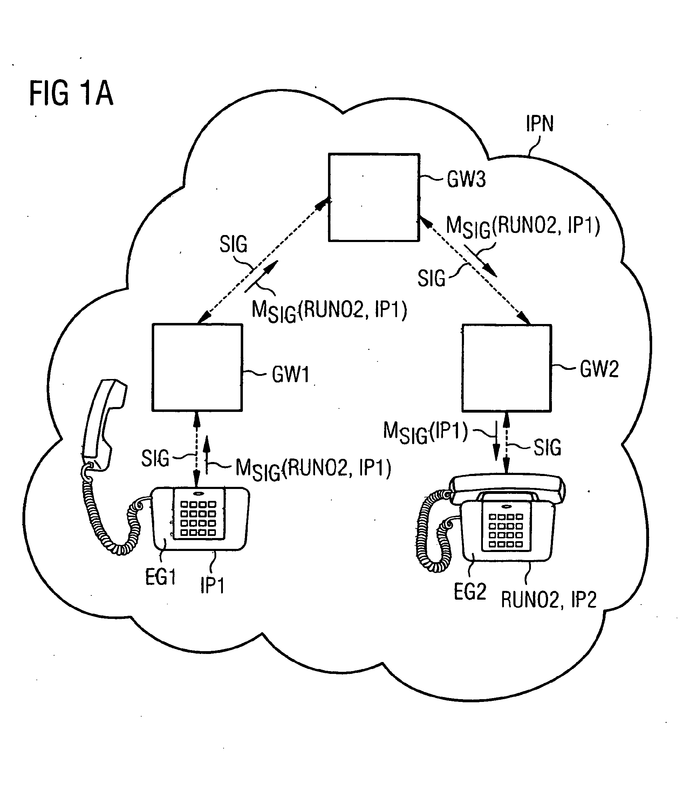

In den Figuren 1A bis 1C sind in schematischer Darstellung die Komponenten eines paketorientierten Kommunikationssystems dargestellt. Die Komponenten sind insbesondere eine rufende erste Endeinrichtung EG1, eine gerufene zweite Endeinrichtung EG2 sowie drei Verbindungssteuerungen GW1, GW2 und GW3. Die Kopplung zwischen den genannten Komponenten erfolgt über ein IP-Netzwerk IPN als erfindungsgemäßes paketorientiertes Kommunikationsnetzwerk, wobei die im Folgenden erwähnten Meldungen und Verbindungen auf IP-basierten Konzepten beruhen. Die Endeinrichtungen EG1 und EG2 sind IP-basierte Sprachendgeräte und sind in den Figuren 1A bis IC als Telefone visualisiert. Die Verbindungssteuerungen GW1, GW2, GW3 sind als Rechtecke dargestellt und erfüllen im vorliegenden Ausführungsbeispiel Gateway- und Gatekeeper-Funktionalitäten. Das bedeutet insbesondere, dass aufgrund der Gatekeeper-Funktionalität die jeweiligen Endeinrichtungen EG1, EG2 einer bestimmten Verbindungssteuerung zugewiesen sind und darüber hinaus die jeweilige Verbindungssteuerung aufgrund ihrer Gateway-Funktionalität einen Übergang zwischen Subnetzwerken des paketorientiertem Kommunikationssystems und einem Übergang zu leitungsorientierten oder anderen paketorientierten Kommunikationssystemen ermöglicht.

Das Kommunikationssystem sei dergestalt konfiguriert, dass die erste Endeinrichtung EG1 bei der ersten Verbindungssteuerung GW1 registriert ist, sowie die zweite Endeinrichtung EG2 bei der zweiten Verbindungssteuerung GW2. Darüber hinaus kann die erste Verbindungssteuerung GW1 Verbindungen an die dritte Verbindungssteuerung GW3 weiterleiten und diese kann wiederum aufgrund ihrer Konfiguration Meldungen und Verbindungen an die zweite Verbindungssteuerung GW2 und an die erste Verbindungssteuerung GW1 übermitteln. Die zweite Verbindungssteuerung GW2 ist derart konfiguriert, dass sie Meldungen an die dritte Verbindungssteuerung GW3 übermitteln kann. Eine direkte Kommunikation zwischen der ersten Verbindungssteuerung GW1 und der zweiten Verbindungssteuerung GW2 soll über das IP-Netzwerk IPN möglich sein, doch sei angenommen, dass sich die beiden Verbindungssteuerungen GW1 und GW2 nicht gegenseitig bekannt sind, sodass eine Verbindung jeweils über eine Zwischenverbindungssteuerung - hier die dritte Verbindungssteuerung GW3 - erfolgt.

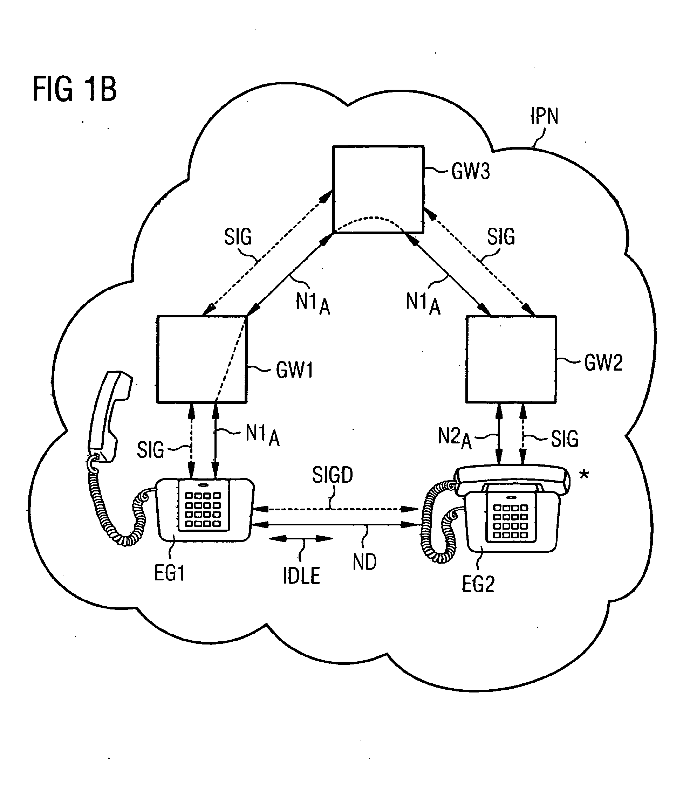

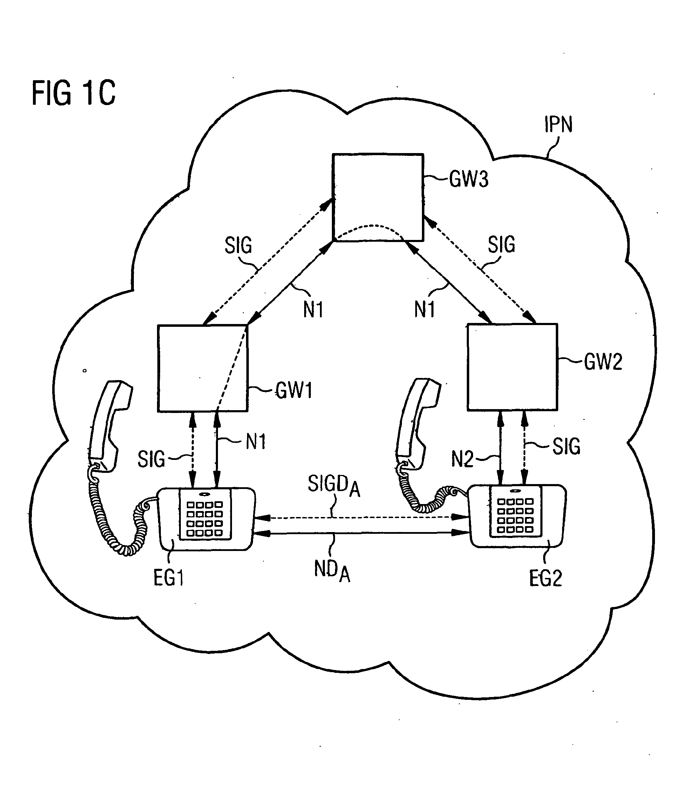

Allen in den Figuren 1A-1C dargestellten Endeinrichtungen und Verbindungssteuerungen seien IP-Adressen zugewiesen, wobei lediglich die erste, der ersten Endeinrichtung EG1 zugeordneten IP-Adresse IP1 und die zweite, der zweiten Endeinrichtung EG2 zugeordneten IP-Adresse IP2 dargestellt sind. Darüber hinaus besitzen beide Endeinrichtungen EG1 und EG2 eine Rufnummer zur Adressierung im Sprachkommunikationssystem, wobei lediglich die der zweiten Endeinrichtung EG2 zugeordnete Rufnummer RUN02 in der Figur 1 dargestellt ist.

Gerichtete Meldungen sind in der Figur 1 als gerichtete Pfeile mit Pfeilspitze in Übertragungsrichtung dargestellt und ungerichtete Meldungen sowie Verbindungen sind in den Figuren als Doppelpfeil dargestellt. Signalisierungsverbindungen sind strichliert und Nutzdatenverbindungen als durchgehende Linien dargestellt.

Im Folgenden wird anhand der Figur 1 ein Etablieren einer Sprachkommunikation zwischen der rufenden, ersten Endeinrichtung EG1 und der gerufenen, zweiten Endeinrichtung EG2 erläutert. Initialer Auslöser sei hierbei das Abheben des Telefonhörers sowie das Wählen der Rufnummer RUNO2 an der ersten Endeinrichtung EG1. Ausgelöst dadurch wird zwischen der ersten Endeinrichtung EG1 und der ersten Verbindungssteuerung GW1 eine Signalisierungsverbindung SIG zum Zweck eines Rufaufbaus aufgebaut, in deren Rahmen eine Signalisierungsmeldung M_{SIG} von der ersten Endeinrichtung EG1 an die erste Verbindungssteuerung GW1 übermittelt wird. Als Parameter werden insbesondere die Zielrufnummer RUNO2 der zweiten gerufenen Endeinrichtung EG2 sowie die Sende-IP-Adresse IP1 der ersten Endeinrichtung EG1 übermittelt. Eine derartige Signalisierungsmeldung M_{SIG} könnte beispielsweise eine Setup-Meldung gemäß der ITU-T-Empfehlung H.323 (ITU-T: International Telecommunication Union - Telecommunications Standardization Sector) oder eine Invite-Meldung gemäß des SIP-Protokolls (SIP: Session Initiation Protocol)der IETF-Arbeitsgruppe (IETF: Internet Engineering Task Force) sein.

Durch die erste Verbindungssteuerung GW1 wird daraufhin geprüft, ob eine Endeinrichtung mit der zweiten Rufnummer RUN02 bei ihr registriert ist. Dies sei im vorliegenden Ausführungsbeispiel nicht der Fall. Daraufhin wird durch die erste Verbindungssteuerung GW1 die Rufaufbausignalisierung an den nächsten konfigurierten Weiterleitungsknoten weitergeleitet. Dies sei im vorliegenden Ausführungsbeispiel die dritte Verbindungssteuerung GW3. Übermittelt wird wiederum eine Signalisierungsmeldung M_{SIG}, zusammen mit der Zielrufnummer RUN02 und der Sende-IP-Adresse IP1. Im vorliegenden Ausführungsbeispiel sei die Zielrufnummer RUN02 ebenfalls nicht bei der dritten Verbindungssteuerung GW3 registriert. Daraufhin übermittelt die dritte Verbindungssteuerung GW3 eine Abfrage an weitere Verbindungssteuerungen und darunter insbesondere eine Abfrage an die zweite Verbindungssteuerung GW2 (in Figur 1A ist lediglich die Abfrage zur zweiten Verbindungssteuerung GW2 durch eine Signalisierungsmeldung M_{SIG} dargestellt). Somit wird eine Signalisierungsverbindung zwischen der dritten Verbindungssteuerung GW3 und der zweiten Verbindungssteuerung GW2 aufgebaut, über die eine Signalisierungsmeldung M_{SIG} mit den bereits genannten Parametern übermittelt wird.

Die zweite Verbindungssteuerung GW2 überprüft die bei ihr registrierten Endeinrichtungen und erkennt, das zugeordnet zur Rufnummer RUN02 die zweite Endeinrichtung EG2 bei ihr registriert ist. Durch die zweite Verbindungssteuerung GW2 wird anhand der Rufnummer RUN02 und internen Konfigurationsdaten die zweite IP-Adresse IP2 der zweiten Endeinrichtung EG2 ermittelt. Daraufhin wird eine Signalisierungsmeldung M_{SIG} an diese IP-Adresse IP2 mit der IP-Adresse IP1 der ersten Endeinrichtung EG1 als Parameter gesendet. Somit ist eine Signalisierung SIG von der ersten Endeinrichtung EG1 über die Verbindungssteuerungen GW1, GW3 und GW2 zur zweiten gerufenen Endeinrichtung EG2 durchgehend aufgebaut. Quittungen im Rahmen der Signalisierung SIG sind dabei aus Gründen der Übersichtlichkeit in Figur 1A nicht dargestellt. Aufgrund der eingehenden Signalisierung SIG wird an der zweiten Endeinrichtung EG2 einem Benutzer der Endeinrichtung EG2 ein eingehender Ruf optisch oder akustisch signalisiert, insbesondere durch Klingeln des Telefons. Dies ist in Figur 1B durch einen Stern neben dem Telefonhörer der zweiten Endeinrichtung EG2 angedeutet.

Im Folgenden wird eine erste Nutzdatenverbindung N1 zwischen der rufenden, ersten Endeinrichtung EG1 und dem - aus Sicht der ersten Endeinrichtung EG1 - letzten Gateway in der Kette der Signalisierungen SIG, d.h. der zweiten Verbindungssteuerung GW2 aufgebaut, sowie eine Nutzdatenverbindung N2 zwischen der zweiten Verbindungsteuerung GW2 und der gerufenen Endeinrichtung EG2. Beide Nutzdatenverbindungen sind aktiv, was in der Zeichnung durch ein tiefgestelltes "A" angedeutet ist. Die Nutzdatenverbindung N1 als erfindungsgemäße zweite Nutzdatenverbindung wird hierbei insbesondere dazu verwendet, der ersten Endeinrichtung EG1 den Rufton im Hörer zu generieren und zu übermitteln, so das ein Benutzer an der ersten Endeinrichtung EG1 erkennt, das der Rufwunsch bis zum zweiten Endgerät EG2 durchsignalisiert worden ist. Darüber hinaus kann die Nutzdatenverbindung N1 zur Übermittlung von automatischen Ansagen, zur Bereitstellung von Call-Center-Auswahlmenüs - beispielsweise durch IVR-Systeme (IVR: Interactive Voice Response) - verwendet werden, wobei an der ersten Endeinrichtung EG1 durchgeführte Sprach- und/oder Tasten-Aktionen über die Nutzdatenverbindung N1 an die Verbindungssteuerung GW2 übermittelt werden.

Ebenfalls ausgelöst durch die im Rahmen der Rufaufbausignalisierung eingehenden Signalisierungsmeldung M_{SIG} bei der gerufenen, zweiten Endeinrichtung EG2 wird bereits vor Rufannahme durch die gerufene Endeinrichtung EG2 eine direkte Signalisierungsverbindung SIGD und eine direkte Nutzdatenverbindung ND als erfindungsgemäße erste Nutzdatenverbindung jeweils als direkte Verbindung zum ersten Endgerät EG1 aufgebaut. Eine direkte Verbindung sei hierbei eine Verbindung, die nicht über die Verbindungssteuerungen GW1, GW2, GW3 geleitet wird, wobei jedoch für eine paketorientierte Übermittlung bekannte Netzknoten wie Router, Switches, Bridges, Firewalls im Übermittlungspfad der direkten Verbindungen SIGD, ND enthalten sein können, sofern sie keinerlei Sprach-Konvertierungen oder andere zeitaufwendigen Bearbeitungen von Datenpaketen der Verbindungen SIGD, ND durchführen. Der direkte Verbindungsaufbau erfolgt dabei anhand der an die zweite Endeinrichtung EG2 übergebenen ersten IP-Adresse IP1, wobei Netzwerkadressumsetzungen zwischen verschiedenen Subnetzen im vorliegenden Ausführungsbeispiel unbeachtet bleiben. Darüber hinaus kann der direkte Verbindungsaufbau in Anlehnung an oder Verwendung von bekannten DMC-Verfahrensschritten zur direkten Medienkommunikation durchgeführt werden.

Die aufgebauten Verbindungen SIGD, ND werden vorgehalten für ein späteres schnelles Durchschalten der Kommunikation zwischen der zweiten Endeinrichtung EG2 und der ersten Endeinrichtung EG1 nach Annahme des Rufs durch die zweite Endeinrichtung EG2. Dabei werden bereits bei Aufbau der Signalisierungsverbindung SIGD und der direkten Nutzdatenverbindung ND zeitaufwändige Verbindungsaufbauschritte, wie beispielsweise der Austausch von Schlüsseln und/oder Zertifikaten für eine gesicherte, spätere Kommunikation, durchgeführt. Die erste Endeinrichtung EG1 beteiligt sich aktiv am direkten Verbindungsaufbau der Signalisierungsverbindung SIGD und der Nutzdatenverbindung ND wobei eine Datenübermittlung über die bereits aufgebauten Verbindungen SIG und N1 davon nicht beeinträchtigt werden.

Im Folgenden werden über die direkte Nutzdatenverbindung ND protokollkonforme Aufrechterhaltungspakete IDLE zwischen der gerufenen zweiten Endeinrichtung EG2 und der rufenden Endeinrichtung EG1 übermittelt damit die direkte Nutzdatenverbindung ND trotz scheinbarer Inaktivität nicht automatisch abgebaut wird, sondern aufrechterhalten bleibt. Die rufende, erste Endeinrichtung EG1 ist nun in derart ausgestaltet, dass sie, während sie die Nutzdatenverbindung N1 bedient, eingehende Datenpakete über die direkte Nutzdatenverbindung ND analysiert. Eine Analyse der eingehenden Datenpakete erfolgt hierbei dergestalt, dass die erste Endeinrichtung EG1 anhand der eingehenden Pakete erkennt, ob es sich bei den eingehenden Datenpaketen weiterhin um Aufrechterhaltungspakete IDLE zur Rufabbauunterdrückung oder bereits um gültige Nutzdatenpakete nach einer Rufannahme durch die zweite Endeinrichtung EG2 handelt.

Ein Empfangen von Aufrechterhaltungspaketen IDLE bei der ersten Endeinrichtung EG1 bewirkt ein Ignorieren der eingegangen Aufrechterhaltungspakete IDLE und/oder ein Übermitteln von ebenfalls Aufrechterhaltungspaketen IDLE über die direkte Nutzdatenverbindung ND an die gerufene Endeinrichtung EG2. Eine Rufannahme durch die gerufene Endeinrichtung EG2 würde darüber hinaus an der ersten rufenden Endeinrichtung EG1 erkannt werden, indem über die direkte Nutzdatenverbindung ND ein Datenpaket eintrifft, das sich von einer Aufrechterhaltungsmeldung bzw. einem Aufrechterhaltungspaket IDLE unterscheidet. Dies ist im Folgenden anhand Figur 1C näher erläutert.

Ein in Figur 1C angedeutetes Abheben des Telefonhörers der zweiten Endeinrichtung EG2 bewirkt ein Annehmen des Rufes durch die zweite Endeinrichtung EG2. Unmittelbar durch diese Rufannahme an der zweiten Endeinrichtung EG2 wird die am Mikrofon des Telefonhörers der zweiten Endeinrichtung EG2 anstehende Kommunikation in der zweiten Endeinrichtung EG2 weiterverarbeitet. Ohne ein explizites Signalisieren über eine der Signalisierungsverbindungen SIG oder SIGD - wobei ein explizites Signalisieren der Rufannahme mittels SIG und/oder SIGD in alternativen Ausgestaltungen zusätzlich vorgesehen sein kann, um auch bei stummgeschaltetem Mikrofon der ersten Endeinrichtung EG1 die Rufannahme der zweiten Endeinrichtung EG2 mitzuteilen oder um eine korrekte Erfassung für eine Ermittlung von Gesprächsgebühren zu gewähren - wird die eingehende Kommunikation durch die zweite Endeinrichtung EG2 digitalisiert und über die direkte Nutzdatenverbindung ND an die rufende, erste Endeinrichtung EG1 übermittelt, wobei ein Aussenden von Aufrechterhaltungspaketen IDLE an der zweiten Endeinrichtung EG2 beendet wird. Durch Eintreffen eines derartigen, sich von Aufrechterhaltungspakten IDLE unterscheidenden Nutzdatenpakets an der rufenden, ersten Endeinrichtung EG1, wird durch diese die Rufannahme der zweiten Endeinrichtung EG2 erkannt. Darüber hinaus wird durch die erste Endeinrichtung EG1 implizit - d.h. ohne Übermittlung einer Quittung oder Bestätigung - diese Rufannahme akzeptiert, indem sofort, ohne jegliche weitere Signalisierung, die über die direkte Nutzdatenverbindung ND eingehenden Nutzdaten weiterverarbeitet und über den zugehörigen Telefonhörer der ersten Endeinrichtung EG1 ausgegeben werden. Weiterhin wird die Nutzdatenverbindung N1 zwischen der rufenden Endeinrichtung EG1 und der zweiten Verbindungssteuerung GW2 inaktiv geschaltet, indem von der rufenden Endeinrichtung EG2 keinerlei weitere von Aufrechterhaltungspaketen IDLE sich unterscheidenden Pakete über diese Verbindung übermittelt werden. Über den Telefonhörer der ersten Endeinrichtung EG1 aufgenommene Töne und/oder Sprache werden ab diesen Zeitpunkt ebenfalls nicht weiter über die Nutzdatenverbindung N1 übermittelt, sondern über die direkte Nutzdatenverbindung ND, ohne dass eine zusätzliche Signalisierung durchgeführt würde. Eingehende Nutzdatenpakete über die Nutzdatenverbindung N1 werden durch die ersten Endeinrichtung EG1 verworfen.

Auf diese Weise ist ein schnelles Durchschalten einer Kommunikation über eine direkte Nutzdatenverbindung ND möglich. Ein Verlust von Nutzdatenpaketen oder einer an einen Telefonhörer anliegende Kommunikation kann auf diese Weise vermieden werden. Dies ist insbesondere vorteilhaft wenn es sich bei der zweiten Endeinrichtung EG2 um ein Gerät für automatische Ansagen handelt oder um ein Fax- oder Modemgerät. Die letztgenannten Geräte besitzen üblicherweise die Eigenschaft sehr schnell nach signalisierter Rufannahme Nutzdaten zu übermitteln, sodass ein Verlust dieser Nutzdaten einen negativen Effekt nach sich ziehen würde. Insbesondere der Verlust von Fax- oder Modemnutzdaten könnte einen Verbindungsaufbau verhindern bzw. unmöglich machen. Dies kann durch das vorgestellte Verfahren verhindert werden, weil direkt nach der Rufannahme die anstehende Kommunikation ohne Verluste und ohne Verzögerung an die rufende Endeinrichtung EG1 übermittelt werden.

Die bestehenden Nutzdatenverbindungen N1 und N2 sowie die Signalisierungsverbindungen SIG, die über die Verbindungssteuerungen GW1, GW2, GW3 verlaufen, können weiterhin aufrechterhalten werden oder aber alternativ (nicht dargestellt) im Rahmen von weiteren Signalisierungsmeldungen abgebaut werden. Sofern diese Verbindungen nicht abgebaut werden, ist bei beiden Endeinrichtungen EG1 und EG2 vorgesehen, das eingehende Pakete über diese Verbindungen ignoriert werden.

Die in Figur 1 dargestellten Endeinrichtungen EG1, EG2 und die dargestellte Kommunikationssystemstruktur sind hierbei lediglich als Beispiel zu betrachten. Eine Verallgemeinerung gegenüber beliebigen Endeinrichtungen und einer beliebigen Topologie sowie einem beliebigen Kommunikationsprotokoll ist ohne Einschränkung des Erfindungsgehalts auf einfache Weise möglich.

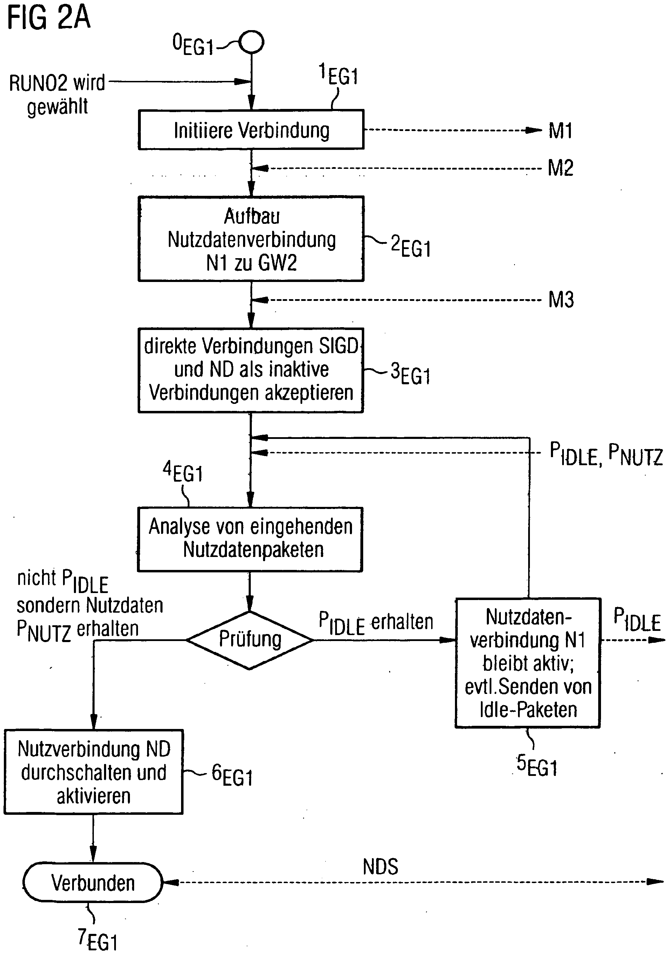

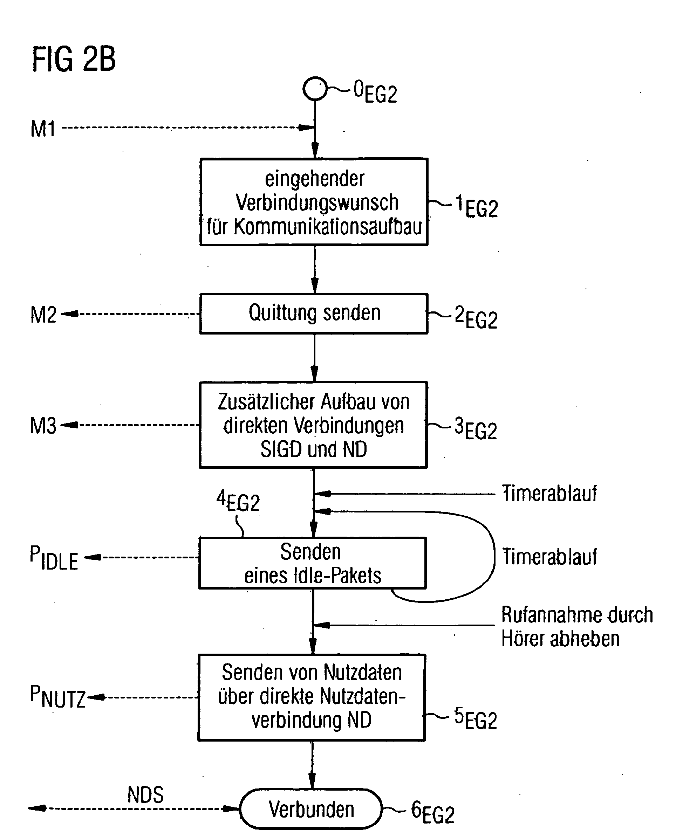

In Figur 2 wird im Folgenden jeweils ein Zustandsübergangsdiagramm für die rufende Endeinrichtung EG1 und die gerufene Endeinrichtung EG2 gemäß der anhand von Figur 1 dargestellten Verfahrensschritte erläutert. Die Zustandsübergänge werden anhand ihrer zeitlichen Reihenfolge gemeinsam für die rufende und die gerufene Endeinrichtung EG1, EG2 erläutert, wobei jeweils ein Zustandsübergangsdiagramm in der Figur 2A für die rufende Endeinrichtung EG1 und in der Figur 2B für die gerufene Endeinrichtung EG2 voneinander getrennt dargestellt ist. Ausgangssituation sei für die rufende Endeinrichtung EG1 eine Ruhezustand 0_{EG1} und für die gerufene Endeinrichtung EG2 ebenfalls ein Ruhezustand 0_{EG2}.

Ausgelöst durch ein Wählen der Rufnummer RUN02 an der ersten Endeinrichtung EG1 wechselt die erste Endeinrichtung EG1 in einen Initialisierungszustand für die aufzubauende Verbindung (Zustand 1_{EG1}). Ausgelöst dadurch wird eine Signalisierungsmeldung M1 an die gerufene Endeinrichtung EG2 übermittelt. Die Übermittlung erfolgt insbesondere über mehrere Verbindungssteuerungen, wobei diese in Figur 2 nicht dargestellt sind. Durch den Eingang der Signalisierungsmeldung M1 verlässt die gerufene Endeinrichtung EG2 ihren Ruhezustand und wechselt in den Zustand 1_{EG2}, in dem Schritte durchgeführt werden, die bei einem eingehenden Verbindungswunsch ausgeführt werden. Die gerufene Endeinrichtung EG2 übermittelt eine zur Meldung M1 gehörige Antwort im Zustand 2_{EG2} über denselben Signalisierungspfad, mithilfe der Signalisierungsmeldung M2. Daraufhin wechselt die rufende Endeinrichtung EG1 ihren Zustand in den Zustand 2_{EG1}, der einen Aufbau einer Nutzdatenverbindung zu einer am Meldungsverkehr beteiligten Verbindungssteuerung bewirkt. Die gerufene Endeinrichtung EG2 geht weiterhin sofort vom Zustand 2_{EG2} in den Zustand 3_{EG2} über, indem eine zusätzliche direkte Signalisierungs- und Nutzdatenverbindung aufgebaut wird. Zu diesem Zweck wird eine Signalisierungsmeldung M3 an die rufende Endeinrichtung EG1 übermittelt, sowie erste Pakete über die direkte Nutzdatenverbindung (gemäß der Bezeichnung von Figur 1 im Folgenden mit "ND" bezeichnet).

In einer Abwandlung des Verfahrens könnte auch die erste Endeinrichtung EG1 die direkte Nutzdatenverbindung ND initiieren. Dies ist insbesondere dann möglich, wenn als ein Parameter der Signalisierungsmeldung M2 eine IP-Adresse der zweiten Endeinrichtung EG2 übermittelt wird.

Ausgelöst durch den Eingang dieser Signalisierungsmeldung M3 wechselt die rufende Endeinrichtung EG1 ihren Zustand (neuer Zustand 3_{EG1}) und akzeptiert die eingehenden direkten Verbindungen - die direkte Signalisierungsverbindung SIGD und die direkte Nutzdatenverbindung ND - von der gerufenen Endeinrichtung EG2. Darüber hinaus wechselt die rufende Endeinrichtung EG1 ohne Verzug in den Zustand 4_{EG1}, in dem eingehende Pakete, die über die direkte Nutzdatenverbindung ND bei der rufenden Endeinrichtung EG1 eintreffen, analysiert werden. Die gerufene Endeinrichtung EG2 wechselt aufgrund eines Zeitgeber- oder Timer-Ablaufs von dem Zustand 3_{EG2} in den Zustand 4_{EG2} und sendet ein Aufrechterhaltungspaket in diesem Zustand als Nutzdatenpakete P_{IDLE} mit lediglich "Dummy"-Inhalt an die rufende Endeinrichtung EG1 über die direkte Nutzdatenverbindung ND.

Im weiterhin aktiven Zustand 4_{EG1} analysiert die rufende Endeinrichtung EG1 dieses eingehende Nutzdatenpaket. Sofern es sich um ein Aufrechterhaltungspaket handelt, wechselt die rufende Endeinrichtung EG1 in den Zustand 5_{EG1} und bewirkt dadurch, dass weiterhin die direkte Nutzdatenverbindung ND nicht aktiviert wird, sondern dass über die direkte Nutzdatenverbindung ND, ausgehend von der rufenden Endeinrichtung EG1, ebenfalls Aufrechterhaltungsnutzdatenpakete P_{IDLE} übermittelt werden. Bei erneutem Timer-Ablauf an der gerufenen Endeinrichtung EG2 wiederholt sich erneut dieser Vorgehensweise, so dass erneut ein Aufrechterhaltungsnutzdatenpaket P_{IDLE} zur rufenden Endeinrichtung EG1 übermittelt wird und dieses dort analog zu den vorher genannten Schritten analysiert wird. Dies wiederholt sich jetzt solange, bis entweder die rufende Endeinrichtung EG1 ihren Rufaufbauwunsch beendet, bis an der gerufenen Endeinrichtung EG2 eine Rufannahme erfolgt - insbesondere durch Abheben eines Telefonhörers - oder bis eine der beteiligten Verbindungssteuerungen ein Beenden der Verbindung initiiert.

Ausgelöst durch eine derartige Rufannahme wechselt die gerufene Endeinrichtung EG2 vom Zustand 4_{EG2} in den Zustand 5_{EG2}. In diesem Zustand werden anliegende Kommunikationsdaten direkt in Nutzdaten umgewandelt und über die direkte Nutzdatenverbindung ND mittels gefüllten Nutzdatenpakete P_{NUTZ} an die rufenden Endeinrichtung EG1 übermittelt. Dieses Senden von gefüllten Nutzdatenpaketen P_{NUTZ} wird sich jetzt so lange fortgesetzt, bis der Ruf auf eine bekannte Art und Weise - z.B. durch Auflegen des Telefonhörers - beendet wird. Die rufende Endeinrichtung EGi befindet sich vor Eintreffen des ersten gefüllten Nutzdatenpakets P_{NUTZ} immer noch im Zustand 4_{EG1}, in dem eingehende Nutzdatenpakete über die direkte Nutzdatenverbindung ND analysiert werden. Erreicht nun ein gefülltes Nutzdatenpaket P_{NUTZ} die rufende Endeinrichtung EG1, so erkennt diese den Empfang eines gültigen, eine Rufannahme beschreibenden Nutzdatenpakets P_{NUTZ} und wechselt in den Zustand 6_{EG1}, in dem eine Durchschaltung der Verbindung und somit der zu übertragenden Kommunikation bis zum Ein/Ausgabegerät (d.h. den Telefonhörer) der rufenden Endeinrichtung EG1 erfolgt. In diesem Zustand verarbeitet die rufende Endeinrichtung EG1 eingehende Nutzdatenpakete P_{NUTZ}, die über die direkte Nutzdatenverbindung ND eintreffen, sowie sendet eigene Nutzdatenpakete über diese direkte Nutzdatenverbindung ND zur gerufenen Endeinrichtung EG2 aus. Beide Endeinrichtungen EG1, EG2 können somit in einen verbundenen Zustand - Zustände 7_{EG1} bzw. 6_{EG2} - überwechseln, in dem ein Nutzdatenstrom NDS an Nutzdatenpaketen über die direkte Nutzdatenverbindung ND ausgetauscht wird. Weitere Schritte, wie eine Ausführung von bestimmten Leistungsmerkmalen oder später ein Rufabbau, sind nun möglich. Diese Schritte werden aber in den dargestellten Figuren 2A und 2B nicht weiter erläutert.

Die in Figur 2 veranschaulichten Zustände veranschaulichen eine weitgehend vereinfachte Darstellung eines erfindungsgemäßen Verbindungsaufbaus. Beispielsweise wurde aus Übersichtlichkeitsgründen eine Kommunikation zwischen einer Verbindungssteuerung und der ersten Endeinrichtung EG1 weggelassen. So hätte ein Beachten dieser Verbindung zur Folge, dass in Zustand 6_{EG1} bei der ersten Endeinrichtung EG1 eingehende Nutzdatenpakete von einer Verbindungssteuerung verworfen würden. In den Zuständen 2_{EG1} bis 5_{EG1} würden dagegen eingehende Nutzdatenpakete von einer Verbindungssteuerung durch die ersten Endeinrichtung EG1 verarbeitet werden.

Die anhand der Figuren 1 und 2 dargestellten Verfahrensschritte sind insofern vorteilhaft, als dass mittels des Verfahrens ein schnelles und verlustfreies Umschalten zwischen einer bestehenden Nutzdatenverbindung und einer bereits aufgebauten, aber noch nicht aktiven Nutzdatenverbindung ermöglicht wird. Dies ist insbesondere vorteilhaft, wenn aufgrund von zeitaufwendigen und komplexen Rufaufbauverfahren ein Verbindungsaufbau einer Nutzdatenverbindung vergleichsweise langsam vollzogen wird, so dass ohne Einsatz der Erfindung empfohlene maximale Durchschalteverzögerungen - beispielsweise 250ms maximale Verzögerung, empfohlen durch die ITU-T - nicht eingehalten werden können.

Darüber hinaus ist vorteilhaft, dass eine Integration in bestehende Implementierungen von Protokollen und Übertragungsverfahren auf einfache Weise möglich ist, da lediglich geringe Modifikationen nötig sind.

Weiterhin kann für die Signalisierung und für die Nutzdatenverbindung auf bekannte Verfahren zurückgegriffen werden. Dies sind insbesondere Verfahrensschritte gemäß H.323, SIP, eine Übertragung der Nutzdatenpakete gemäß RTP (Real-Time Transport Protcol) und/oder sonstige Standards oder Implementierungen. Das Verfahren kann vorteilhafterweise auf allen IP-basierten Kommunikationssystemen angewendet werden, die für eine echtzeitkritische Übertragung von Medienströmen - beispielsweise im Rahmen von Voice-over-IP oder Multimediaover-IP - vorgesehen sind. Obwohl im vorliegenden Ausführungsbeispiel lediglich paketbasierte Verbindungen eingesetzt werden, können beispielsweise einzelne Signalisierungsabschnitte zwischen den Verbindungssteuerungen auch durch leitungsbasierte Kommunikationsabschnitte durchgeführt werden.

## Patentansprüche

1. Verfahren zum Etablieren einer Kommunikation in einem paketorientierten Kommunikationsnetzwerk (IPN) zwischen einer rufenden (EG1) und einer gerufenen Endeinrichtung (EG2), bei dem
- vor einer Rufannahme durch die gerufene Endeinrichtung (EG2), ausgelöst durch eine Meldung (M_{SIG}) im Rahmen einer Rufaufbausignalisierung (SIG), eine zweite Nutzdatenverbindung (N1) zwischen der rufenden Endeinrichtung (EG1) und einer Verbindungssteuerung (GW2) aufgebaut wird, wobei
- vor der Rufannahme durch die gerufene Endeinrichtung (EG2), ausgelöst durch eine Meldung (M_{SIG}, M3) im Rahmen der Rufaufbausignalisierung (SIG), eine direkte, erste Nutzdatenverbindung (ND) unter Umgehung von Verbindungssteuerungen (GW1, GW2, GW3), wie Gateways und/oder Gatekeeper, zwischen der rufenden (EG1) und der gerufenen Endeinrichtung (EG2) aufgebaut und aufrechtgehalten wird,
- Aufrechterhaltungspakete (IDLE, P_{IDLE}) zwischen der rufenden (EG1) und der gerufenen Endeinrichtung (EG2) über die erste Nutzdatenverbindung (ND) übermittelt werden damit die bereits aufgebaute, aber noch nicht aktive erste Nutzdatenverbindung (ND) aufrechterhalten bleibt und für eine Übertragung von Nutzdaten bereitsteht, und
- unmittelbar durch die Rufannahme der gerufenen Endeinrichtung (EG2) die Kommunikation mittels der aufgebauten ersten Nutzdatenverbindung (ND) zwischen der rufenden (EG1) und der gerufenen Endeinrichtung (EG2) durchgeschaltet und Nutzdaten übertragen werden.

2. Verfahren nach einem der vorhergehenden Ansprüche, bei dem vor der Rufannahme zwischen der rufenden Endeinrich-tung (EG1) und der gerufenen Endeinrichtung (EG2) eine der ersten Nutzdatenverbindung (ND) zugeordnete, direkte Signalisierungsverbindung (SIGD) zwischen der rufenden Endeinrichtung (EG1) und der gerufenen Endeinrichtung (EG2) aufgebaut wird.

3. Verfahren nach einem der vorhergehenden Ansprüche,
bei dem die rufende Endeinrichtung (EG1) die Rufannahme der gerufenen Endeinrichtung (EG2) anhand von eingehenden Nutzdatenpaketen (P_{NUTZ}) über die erste Nutzdatenverbindung (ND) erkennt und/oder ermittelt.

4. Verfahren nach einem Anspruch 3 wenn rückbezogen auf Anspruch 2,
bei dem die Rufannahme der gerufenen Endeinrichtung (EG2) anhand von eingehenden, sich von Aufrechterhaltungspaketen unterscheidenden, Nutzdatenpaketen über die erste Nutzdatenverbindung (ND) erkennt und/oder ermittelt wird ohne weitere Signalisierung über die Signalisierungsverbindung (SIGD), so dass lediglich die erste Nutzdatenverbindung (ND) überwacht werden muss.

5. Verfahren nach einem der vorhergehenden Ansprüche,
bei dem an der rufenden Endeinrichtung (EG1) die Rufannahme der gerufenen Endeinrichtung (EG2) durch ein zeitlich erstes Empfangen eines Inhalte der Kommunikation enthaltenden Nutzdaten-Pakets (P_{NUTZ}) über die erste Nutzdatenverbindung (ND) erkannt wird.

6. Verfahren nach Anspruch 5,
bei dem bis zu dem Erkennen der Rufannahme der gerufenen Endeinrichtung (EG2) an der rufenden Endeinrichtung (EG1), durch die rufende Endeinrichtung (EG1) ein über die erste Nutzdatenverbindung (ND) eingehendes Paket (P_{IDLE}, P_{NUTZ}) überprüft wird, ob es sich bei dem eingehenden Paket (P_{IDLE}, P_{NUTZ}) entweder um eines der Aufrechterhaltungspakete (IDLE, P_{IDLE}) oder um ein Inhalte der Kommunikation enthaltendes Nutzdaten-Paket (P_{NUTZ}) handelt.

7. Verfahren nach Anspruch 4,
bei dem ausgelöst durch die Rufannahme durch die gerufenen Endeinrichtung (EG2) ein Senden der Aufrechterhaltungspakete (IDLE, P_{IDLE}) beendet wird.

8. Verfahren nach einem der vorhergehenden Ansprüche, bei dem ausgelöst durch die Rufannahme durch die gerufenen Endeinrichtung (EG2)
- Nutzdaten für die Kommunikation über die ersten Nutzdatenverbindung (ND) übermittelt werden, und/oder
- ein Signalisieren der Rufannahme mittels einer Signalisierungsmeldung durch die gerufene Endeinrichtung (EG2) an die rufende Endeinrichtung (EG1) unterbleibt.

9. Verfahren nach einem der vorhergehenden Ansprüche,
bei dem ausgelöst durch ein zeitlich erstes Empfangen eines Inhalte der Kommunikation enthaltendes Nutzdaten-Pakets (P_{NUTZ}) über die erste Nutzdatenverbindung (ND) an der rufenden Endeinrichtung(EG1)
- durch die rufende Endeinrichtung (EG1) die Rufannahme der gerufenen Endeinrichtung (EG2) quittierungslos akzeptiert wird, und/oder
- durch die rufende Endeinrichtung (EG1) die über die zweite Nutzdatenverbindung (N1) eingehenden Nutzdaten verworfen werden.

10. Kommunikationsendeinrichtung zum Etablieren einer Kommunikation in einem paketorientierten Kommunikationsnetzwerk (IPN) für das Kommunikationssystem nach Anspruch 1, umfassend
- Mittel zum Aufbau einer zweiten Nutzdatenverbindung (N1) zwischen der Kommunikationsendeinrichtung und einer Verbindungssteuerung (GW2) vor einer Rufannahme durch eine andere Kommunikationsendeinrichtung, ausgelöst durch eine Meldung (M_{SIG}) im Rahmen einer Rufaufbausignalisierung (SIG),
- Mittel zum Aufbau und Aufrechthalten einer direkten, ersten Nutzdatenverbindung (ND) unter Umgehung von Verbindungssteuerungen (GW1, GW2, GW3) wie Gateways und/oder Gatekeeper, zwischen der Kommunikationsendeinrichtung und der anderen Kommunikationsendeinrichtung vor der Rufannahme durch die andere Kommunikationsendeinrichtung, ausgelöst durch eine Meldung (M_{SIG}, M3) im Rahmen der Rufaufbausignalisierung (SIG)
- Mittel zum Übermitteln von Aufrechterhaltungspaketen (IDLE, P_{IDLE}) zwischen der rufenden (EG1) und der gerufenen Endeinrichtung (EG2) über die erste Nutzdatenverbindung (ND) damit die bereits aufgebaute, aber noch nicht aktive erste Nutzdatenverbindung (ND) aufrechterhalten bleibt und für eine Übertragung von Nutzdaten bereitsteht, und
- Mittel zum Durchschalten der Kommunikation mittels der aufgebauten ersten Nutzdatenverbindung (ND) zwischen der Kommunikationsendeinrichtung und der anderen Kommunikationsendeinrichtung und Übertragen von Nutzerdaten unmittelbar durch die Rufannahme der anderen Kommunikationsendeinrichtung.

11. Kommunikationssystem umfassend eine rufende (EG1) und eine gerufene Endeinrichtung (EG2)zum Etablieren einer Kommunikation in einem paketorientierten Kommunikationsnetzwerk (IPN) zwischen der rufenden (EG1) und der gerufenen Endeinrichtung (EG2),
bei der die rufende Endeinrichtung (EG1) und die gerufene Endeinrichtung (EG2) jeweils als Kommunikationsendeinrichtung nach Anspruch 10 ausgebildet sind.

## Claims

1. A method for establishing a communication between a calling terminal (EG1) and a called terminal (EG2) in a packet oriented communications network (IPN), in which
- before a call is accepted by the called terminal (EG2), a second payload connection (N1) between the calling terminal (EG1) and a connection controller (GW2) is established, triggered by a message (M_{SIG}) within the framework of call set-up signaling (SIG), wherein
- before the call is accepted by the called terminal (EG2), a direct, first payload connection (ND) is established and maintained between the calling terminal (EG1) and the called terminal (EG2), triggered by a message (M_{SIG}, M3) within the framework of call set-up signaling (SIG), bypassing connection controllers (GW1, GW2, GW3) such as gateways and/or gatekeepers,
- maintenance packets (IDLE, P_{IDLE}) are transmitted between the calling terminal (EG1) and the called terminal (EG2) via the first payload connection (ND), so that the first payload connection (ND), which has been established but is not yet active, is maintained and is ready to transmit payloads, and
- as a result of the call acceptance by the called terminal (EG2), the communication is established directly by means of the established first payload connection (ND) between the calling terminal (EG1) and the called terminal (EG2), and payloads are transmitted.

2. The method according to any of the preceding claims, in which, before a call between the calling terminal (EG1) and the called terminal (EG2) is accepted, a direct signaling connection (SIGD), assigned to the first payload connection (ND), is established between the calling terminal (EG1) and the called terminal (EG2).

3. The method according to any of the preceding claims, in which the calling terminal (EG1) recognizes and/or detects the call acceptance by the called terminal (EG2) on the basis of payload packets (P_{NUTZ}) incoming via the first payload connection (ND).

4. The method according to claim 3, where dependent on claim 2, in which the call acceptance by the called terminal (EG2) is recognized and/or detected on the basis of payload packets, which are distinguished from maintenance packets, incoming via the first payload connection (ND), without further signaling via the signaling connection (SIGD), so that only the first payload connection (ND) has to be monitored.

5. The method according to any of the preceding claims, in which, at the calling terminal (EG1), the call acceptance by the called terminal (EG2) is recognized by a chronologically first reception of a payload packet (P_{NUTZ}) containing communication contents via the first payload connection (ND).

6. The method according to claim 5, in which, until the call acceptance by the called terminal (EG2) is recognized by the calling terminal (EG1), the calling terminal (EG1) checks a packet (P_{IDLE}, P_{NUTZ}) incoming via the first payload connection (ND) to determine whether the incoming packet (P_{IDLE}, P_{NUTZ}) is one of the maintenance packets (IDLE, P_{IDLE}) or a payload packet (P_{NUTZ}) containing communication contents.

7. The method according to claim 4 in which, triggered by the call acceptance by the called terminal (EG2), transmission of the maintenance packets (IDLE, P_{IDLE}) is terminated.

8. The method according to any of the preceding claims, in which, triggered by the call-acceptance by the called terminal (EG2),
- communication payloads are transmitted via the first payload connection (ND), and/or
- signaling of the call acceptance by means of a signaling message sent by the called terminal (EG2) to the calling terminal (EG1) ceases.

9. The method according to any of the preceding claims, in which, triggered by a chronologically first reception by the calling terminal (EG1) of a payload packet (P_{NUTZ}) containing communication contents via the first payload connection (ND),
- the call acceptance by the called terminal (EG2) is accepted by the calling terminal (EG1) without acknowledgment, and/or
- the payloads incoming via the second payload connection (N1) are discarded by the calling terminal (EG1).

10. A communications terminal for establishing a communication in a packet oriented communications network (IPN) for the communications system according to claim 1, comprising
- means for establishing a second payload connection (N1) between the communications terminal and a connection controller (GW2) prior to a call acceptance by another communications terminal, triggered by a message (M_{SIG}) within the framework of call set-up signaling (SIG),
- means for establishing and maintaining a direct, first payload connection (ND) between the communications terminal and the other communications terminal prior to the call acceptance by the other communications terminal, triggered by a message (M_{SIG}, M3) within the framework of call set-up signaling (SIG), bypassing connection controllers (GW1, GW2, GW3) such as gateways and/or gatekeepers,
- means for transmitting maintenance packets (IDLE, P_{IDLE}) between the calling terminal (EG1) and the called terminal (EG2) via the first payload connection (ND), so that the first payload connection (ND), already established but not yet active, is maintained and is ready to transmit payloads, and
- means for establishing the communication by means of the established first payload connection (ND) between the communications terminal and the other communications terminal, and transmitting payloads directly as a result of the call acceptance by the other communications terminal.

11. A communications system comprising a calling terminal (EG1) and a called terminal (EG2) for establishing a communication in a packet oriented communications network (IPN) between the calling terminal (EG1) and the called terminal (EG2), in which the calling terminal (EG1) and the called terminal (EG2) are each embodied as a communications terminal according to claim 10.

## Revendications

1. Méthode pour établir une communication dans un réseau de communication orienté paquet (IPN) entre un terminal appelant (EG1) et un terminal appelé (EG2), dans laquelle
- avant l'acceptation d'un appel par le terminal appelé (EG2), déclenchée par un message (M_{SIG}) dans le cadre d'une signalisation d'établissement d'appel (SIG), une deuxième connexion de données utiles (N1) a été établie entre le terminal appelant (EG1) et une commande de connexion (GW2), sachant que
- avant l'acceptation d'un appel par le terminal appelé (EG2), déclenchée par un message (M_{SIG}, M3) dans le cadre de la signalisation d'établissement d'appel (SIG), une première connexion de données utiles (ND), directe, est établie et maintenue entre le terminal appelant (EG1) et le terminal appelé (EG2), en contournant des commandes de connexion (GW1 GW2, GW3), telles que des passerelles et/ou des contrôleurs d'accès,
- des paquets de maintien (IDLE, P_{IDLE}) entre le terminal appelant (EG1) et le terminal appelé (EG2) ont été transmis via la première connexion de données utiles (ND) pour que la première connexion de données utiles (ND) déjà établie mais pas encore active soit maintenue et soit disponible pour une transmission de données utiles, et
- la communication au moyen de la première connexion de données utiles (ND) est directement transférée et des données utiles sont transmises entre le terminal appelant (EG1) et le terminal appelé (EG2) par l'acception de l'appel du terminal appelé (EG2).

2. Méthode selon l'une quelconque des revendications précédentes, dans laquelle, avant l'acceptation de l'appel entre le terminal appelant (EG1) et le terminal appelé (EG2), une connexion de signalisation (SIGD) directe, affectée à la première connexion de données utiles (ND) est établie entre le terminal appelant (EG1) et le terminal appelé (EG2).

3. Méthode selon l'une quelconque des revendications précédentes,
dans laquelle le terminal appelant (EG1) détecte et/ou détermine l'acceptation de l'appel du terminal appelé (EG2) à l'aide de paquets de données utiles entrants (P_{NUTZ}) via la première connexion de données utiles (ND).

4. Méthode selon la revendication 3, conformément à la revendication 2,
dans laquelle l'acceptation de l'appel du terminal appelé (EG2) est détectée et/ou déterminée à l'aide de paquets de données utiles entrants, se différenciant des paquets de maintien, via la première connexion de données utiles (ND), sans aucune autre signalisation via la connexion de signalisation (SIGD), de telle sorte qu'il faille surveiller uniquement la première connexion de données utiles (ND).

5. Méthode selon l'une quelconque des revendications précédentes,
dans laquelle l'acceptation de l'appel du terminal appelé (EG2) est détectée au niveau du terminal appelant (EG1) par une première réception dans le temps d'un paquet de données utiles (P_{NUTZ}) renfermant des contenus de la communication via la première connexion de données utiles (ND).

6. Méthode selon la revendication 5,
dans laquelle un paquet entrant (P_{IDLE}, P_{NUTZ}) via la première connexion de données utiles (ND) est contrôlé par le terminal appelant (EG1) avant la détection de l'acceptation de l'appel du terminal appelé (EG2) au niveau du terminal appelant (EG1), afin de savoir si le paquet entrant (P_{IDLE}, P_{NUTZ}) est soit un des paquets de maintien (IDLE, P_{IDLE}) soit un paquet de données utiles (P_{NUTZ}) renfermant des contenus de la communication.

7. Méthode selon la revendication 4,
dans laquelle une émission des paquets de maintien (IDLE, P_{IDLE}) est terminée du fait de l'acceptation de l'appel par le terminal appelé (EG2).

8. Méthode selon l'une quelconque des revendications précédentes,
dans laquelle, du fait de l'acceptation de l'appel par le terminal appelé (EG2)
- des données utiles sont transmises pour la communication via la première connexion de données utiles (ND), et/ou
- une signalisation de l'acceptation de l'appel au moyen d'un message de signalisation envoyé par le terminal appelé (EG2) au terminal appelant (EG1) est omise.

9. Méthode selon l'une quelconque des revendications précédentes,
dans laquelle, du fait d'une première réception dans le temps, au niveau du terminal appelant (EG1), d'un paquet de données utiles (P_{NUTZ}) renfermant des contenus de la communication via la première connexion de données utiles (ND),
- l'acceptation de l'appel du terminal appelé (EG2) est acceptée sans accusé de réception du terminal appelant (EG1), et/ou
- les données utiles entrant via la deuxième connexion de données utiles (N1) sont rejetées par le terminal appelant (EG1).

10. Terminal de communication pour l'établissement d'une communication dans un réseau de communication orienté paquet (IPN) pour le système de communication selon la revendication 1, comprenant
- des moyens d'établissement d'une deuxième connexion de données utiles (N1) entre le terminal de communication et une commande de connexion (GW2) avant l'acceptation d'un appel par un autre terminal de communication, déclenchée par un message (M_{SIG}) dans le cadre d'une signalisation d'établissement d'appel (SIG),
- des moyens d'établissement et de maintien d'une première connexion de données utiles (ND), directe, en contournant des commandes de connexion (GW1 GW2, GW3), telles que des passerelles et/ou des contrôleurs d'accès, entre le terminal de communication et l'autre terminal de communication avant l'acceptation de l'appel par l'autre terminal de communication, déclenchée par un message (M_{SIG}, M3) dans le cadre d'une signalisation d'établissement d'appel (SIG),
- des moyens de transmission de paquets de maintien (IDLE, P_{IDLE}) entre le terminal appelant (EG1) et le terminal appelé (EG2) via la première connexion de données utiles (ND) pour que la première connexion de données utiles (ND) déjà établie mais pas encore active soit maintenue et soit disponible pour une transmission de données utiles, et
- des moyens de transfert de la communication au moyen de la première connexion de données utiles (ND) établie, entre le terminal de communication et l'autre terminal de communication et de transmission de données utiles directement par l'acceptation de l'appel de l'autre terminal de communication.

11. Système de communication comprenant un terminal appelant (EG1) et un terminal appelé (EG2) pour établir une communication dans un réseau de communication orienté paquet (IPN) entre le terminal appelant (EG1) et le terminal appelé (EG2),
dans lequel le terminal appelant (EG1) et le terminal appelé (EG2) sont conçus chacun comme un terminal de communication selon la revendication 10.
